**Europäisches Patentamt**

**European Patent Office**

**Office européen des brevets**

(11) Veröffentlichungsnummer: **0 291 556**

**A1**

## (12) EUROPÄISCHE PATENTANMELDUNG

(21) Anmeldenummer: **87107455.5**

(22) Anmeldetag: **22.05.87**

(51) Int. Cl.⁴: **C02F 1/52**

(43) Veröffentlichungstag der Anmeldung:
**23.11.88 Patentblatt 88/47**

(84) Benannte Vertragsstaaten:
**AT CH DE FR GB LI SE**

(71) Anmelder: **Kernforschungszentrum Karlsruhe GmbH**
**Weberstrasse 5 Postfach 3640**
**D-7500 Karlsruhe 1(DE)**

(72) Erfinder: **Rieger, Joachim, Dr.**
**Holbornweg 2**
**D-3400 Göttingen(DE)**
Erfinder: **Eberle, Siegfried, Prof. Dr.**
**Luisenstrasse 43**
**D-7514 Eggenstein(DE)**
Erfinder: **Donnert, Dietfried, Dr.**
**Boeckhstrasse 20**
**D-7500 Karlsruhe(DE)**

(54) **Verfahren zur Entfernung von Phosphat aus Wässern.**

(57) Die Erfindung betrifft ein Verfahren zur Entfernung von Phosphat aus Wässern, bei welchem
    a) bei einem pH-Wert des Wassers im Bereich zwischen 8 und 10
    b) Feststoffe als Abscheidehilfen zugesetzt werden, wonach
    c) aus dem Wasser entfernbare Calciumphosphate gebildet werden.
Der Erfindung liegt die Aufgabe zugrunde, ein Phosphat-Eliminatins-Verfahren zu schaffen, mit welchem Phosphat-Restkonzentrationen bis herunter zu $10^{-3}$ mmol/l P unter Vermeidung einer aufwendigen Vorbehandlung und einer Aufsalzung des zu behandelnden Wassers erreicht werden. Ferner soll die Regeneration eines zugesetzten Reinigungsmittels zur Minimierung des Schlammanfalls vermieden und die Wiederverwendung des Phosphats ermöglicht werden.
Dies wird dadurch erreicht, daß zu dem Wasser
    d) als Abscheidehilfe Erdalkalicarbonat in einer Menge, die einer Konzentration im Bereich von mindestens 1 g/l Wasser entspricht, und
    e) gelöstes $Ca(OH)_2$ in einer Menge, die den pH-Wert des Wassers auf etwa 9 bis 10 einstellt. zugegeben werden.

EP 0 291 556 A1

## Verfahren zur Entfernung von Phosphat aus Wässern.

Die Erfindung betrifft ein Verfahren zur Entfernung von Phosphat aus Wässern, bei welchem
a) bei einem pH-Wert des Wassers im Bereich zwischen 8 und 10
b) Feststoffe als Abscheidehilfen zugesetzt werden, wonach
c) aus dem Wasser entfernbare Calciumphosphate gebildet werden.

Zur Entfernung von Phosphat-Ionen (im folgenden kurz als "Phosphat" bezeichnet) aus Wässern, insbesondere aus Abwässern, sind verschiedene Arbeitsweisen bekannt. Großtechnisch sind vor allem Fällungsanlagen im Einsatz, d. h. die Phosphat-Elimination erfolgt durch Zudosierung von Eisen- oder Aluminiumsalzen (ca. 30 g Fe/m$^3$) bzw. von gelöschtem Kalk zum Wasser. Bei der Lösch-Kalkfällung wird entsprechend der zugegebenen Menge an Ca(OH)$_2$-Suspension unterschieden zwischen dem sogenannten "high lime"-Prozeß (200 - 400 g Ca(OH)$_2$/m$^3$ und dem "low lime-Prozeß (150 - 250 g Ca(OH)$_2$/m$^3$ Wasser).

Bei allen bekannten Fällungs-Verfahren fällt ein Schlamm an, der weiterbehandelt werden muß, wobei dessen Abtrennung vom Wasser häufig zusätzliche Schwierigkeiten bereitet. Bei Fe-oder Al-Fällungen erfolgt zusätzlich eine Aufsalzung des Wassers mit Chlorid bzw. Sulfat. Eine Wiederverwendung des Phosphats aus dem Fällschlamm ist kaum oder nur unter Schwierigkeiten möglich.

In Versuchsanlagen wird in Europa derzeit die biologische Entphosphatung erprobt. Als Vorteil ist zu nennen, daß nur geringe Umbauten in einer Kläranlage notwendig sind, d. h. keine zusätlichen Anlagen erforderlich sind, daß keine Aufsalzung des Vorfluters erfolgt und ein zusätzlicher Schlammanfall weitgehend vermieden wird. Der Hauptnachteil dieses Verfahrens ist die extreme Temperaturabhängigkeit, d. h. es können vor allem in der kalten Jahreszeit keine vorgegebenen Ablaufkonzentrationen eingehalten werden, ausserdem sind Konzentrationen von < 1 mg/l P (= Rest-Phosphat-Konzentrationen, berechnet als mg P/l Wasser) kaum erreichbar. In den USA und in Südafrika sind mehrere großtechnische Anlagen in Betrieb, also in Gebieten ohne Frosteinwirkung mit wesentlich höheren Durchschnittstemperaturen als in Europa.

Im Klärwerk Berlin-Ruhleben wird eine Anlage zur Phosphatentfernung mit Aktivtonerde geplant. Hauptnachteil ist hierbei, daß ein eigener Regenerierzyklus mit NaOH zur Wiederverwendung des erschöpften Aktivtonerde durchgeführt werden muß, der zusätzlich kostenintensiv ist.

Weiterhin existieren bereits Versuchsanlagen nach dem Prinzip der sogenannten impfkristallinduzierten Abscheidung:

1. Eine Anlage in Japan, bei der das im Abwasser vorhandene Carbonat zur Verbesserung der P-Elimination mit Säure umgesetzt und das frei gewordene CO$_2$ ausgeblasen wird und, z. B. bei weichen Wässern, Calcium in Form von CaSO$_4$ zugeführt wird. Das Verfahren setzt sich aus folgenden Schritten zusammen:

Einstellung von pH 4-4,5 mit H$_2$SO$_4$

Ausblasen des CO$_2$ mit Luft

Anreicherung des Wassers mit Ca$^{++}$-Ionen durch: CaSO$_4$-Zugabe

pH-Einstellung mit Ca(OH)$_2$ auf pH 8,5-9

Sandfiltration

Entphosphatung im Wirbelschichtreaktor mit ca. 6 g/l Phosphaterz als "Kristallisationshilfe".

Nachteilig ist die aufwendige Vorbehandlung, die nur bei den vergleichsweise geringen Phosphat- und Fremdionen-Konzentrationen der japanischen Abwässer realisierbar ist. Ein Vergleich der Phosphat-, Carbonat- und Calcium-konzentrationen eines japanischen und die eines Abwassers der Bundesrepublik Deutschland (BRD) ist aus der folgenden Übersicht zu erkennen:

|  | BRD | Japan |  |
|---|---|---|---|
| $tCO_3$ | 5 | 2 | mmol/l (Gesamtkonzentration von Carbonaten) |
| P | 0,3 | 0,1 | mmol/l (mmol Phosphat/l Wasser, berechnet als P) |
| Ca | 2 | 1 | mmol/l |

Die Vorbehandlung des Abwassers bewirkt außerdem eine Aufsalzung des Wassers mit Sulfationen. Die erzielte Restkonzentration ist 0,01 mmol/l P.

2. Eine Pilotanlage in Holland, bei der die Calciumkonzentration des Wassers mit $CaCl_2$ auf ca. 2 mmol/l erhöht und das Wasser anschließend mit NaOH auf pH 8,5-9 gebracht wird, wird in Trentelmann C.C.M.: "Phosphatentfernung durch Kristallisation von Calciumphosphat im Wirbelbett", Weitergehende Reinigung kommunaler Abwässer insbesondere zur Phosphatelimination, Hoechts-Symposium im Werk Knapsack, 15.06.1982, beschrieben. Die Entphosphatung erfolgt dort in einem Wirbelbettreaktor mit Sand als "Impfkristallen". Der Nachteil dieses Verfahrens besteht in den hohen Ablaufkonzentrationen von 0,1 mmol/l P (unfiltritert), bzw. nach zusätzlicher Filtration 0,03 mmol/l P. Ferner erfolgt durch die relative - schwere Sandimpfkristalle ein Abrieb von bereits auf der Sandoberfläche abgeschiedenem Calciumphosphat.

3. Eine weitere Anlage in Holland, bei der durch $Ca(OH)_2$-Zugabe ein pH-Wert von 8 eingestellt wird, um die Ca-Konzentration des Wassers zu erhöhen, wird in Eggers E., Van Dijk J. C.: "Phosphorous Removal by Crystallization in a Fluidized Bed Reactor", Schriftenreihe des ISWW-Karlsruhe 50, 349-361 (1986) vorgestellt. Die Entphosphatung erfolgt mit Calciumphosphatpellets oder Sand als "Impfkristalle" in einem Wirbelshichtreaktor, wobei der pH-Wert weiter mit NaOH angehoben wird. Phosphatkonzentrationen < 1 - 2 mg/l P können nur durch Membranfiltration erreicht werden. Die relativ hohe Rest-P-Konzentration ist offensichtlich auf die inhibierende Wirkung von Carbonat in Wasser, das nicht entfernt wird, zurückzuführen. Deshalb liegen die erzielten Rest-P-Konzentrationen in Japan wesentlich tiefer. Diese inhibierende Wirkung des Carbonats ist in der Literatur beschrieben und wurde auch in eigenen Untersuchungen (Dissertation) nachgewiesen. Durch die großen Kristalle im Wirbelbett entsteht außerdem noch ein starker Abrieb, wodurch die Gefahr eines Austrags von Calciumphosphatpartikeln besteht.

Der Erfindung liegt die Aufgabe zugrunde, eine Phosphat-Eliminations-Verfahren zu schaffen, mit welchem Phosphat-Restkonzentrationen bis herunter zu $10^{-3}$ mmol/l P unter Vermeidung einer aufwendigen Vorbehandlung und einer Aufsalzung des zu behandelnden Wassers erreicht werden. Ferner soll die Regeneration eines zugesetzten Reinigungsmittels zur Minimierung des Schlammanfalls vermieden und die Wiederverwendung des Phosphats ermöglicht werden.

Die Aufgabe wird erfindungsgemäß dadurch gelöst, daß zu dem Wasser

d) als Abscheidehilfe Erdalkalicarbonat in einer Menge, die einer Konzentration im Bereich von mindestens 1 g/l Wasser entspricht, und

e) gelöstes $Ca(OH)_2$ in einer Menge, die den pH-Wert des Wassers auf etwa 9 bis 10 einstellt, zugegeben werden.

Die Erdalkalicarbonat-Zugabe erfolgt in Form von Impfkristallen aus z. B. Calciumcarbonat (das sowohl in chemisch reiner Form als auch verunreinigt als technisches Produkt, z. B. als Kalksteinmehl angewendet werden kann) oder aus Dolomit. Der Konzentrationsbereich, in welchem die Abscheidehilfe mit Erfolg Verwendung findet, liegt zwischen 1 und 600 g/l oder darüber. Für die meisten Wässer sind jedoch Konzentrationen um 100 g/l ausreichend bzw. besonders vorteilhaft. Durch die Wahl eines feinkörnigen Kalksteinmehls in der angegebenen Konzentration hat sich überaschenderweise ergeben, daß allein durch die Einstellung des pHWertes auf 9 mit gelöstem $Ca(OH)_2$ ohne weitere Maßnahmen zur $CO_2$-Entfernung (wie bei dem japanischen Verfahren) Phosphatrestkonzentrationen von 0,03 mmol/l P oder weniger erreichbar sind.

In der Literatur ist nur die Zugabe von Calciumphosphat in Konzentrationen von ca. 1 - 5 g/l bzw. von Sand als "Impfkristalle" zum Wasser angegeben. Durch die Verwendung des Erdalkalicarbonats als Impfkristall in feinkörniger Form (z. B. Dolomit, Kalksteinmehl) sollte das Carbonatproblem (Carbonat behindert die Phosphat-Abscheidung in den Verfahren zum Stande der Technik, daher beispielsweise die aufwendige Vorbehandlung des japanischen Verfahrens) durch Induktion der Calcitkristallisation und Zugabe von $Ca(OH)_2$-Lösung gelöst werden, da das Wasser prinzipiell bezüglich Calcit übersättigt ist. Überraschenderweise wird aber außer Calcit auch Calciumphosphat abgeschieden. Grundsätzlich ist bereits eine kleine Impfkristallkonzentration von 1 g/l ausreichend, wie in Batch-Versuchen gezeigt wurde.

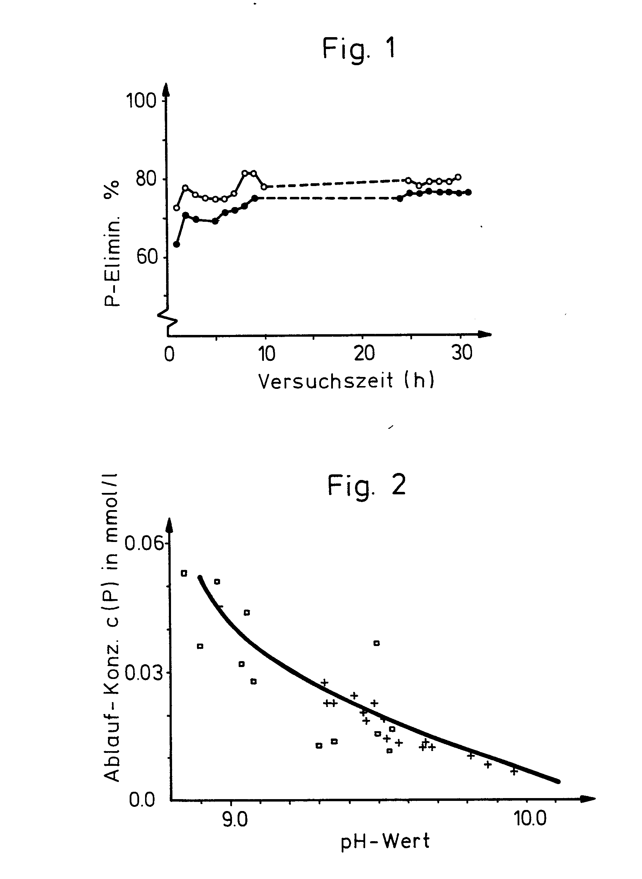

Die Erfindung wird im folgenden anhand einiger Durchführungsbeispiele in Verbindung mit den Figuren 1 und 2 näher erläutert.

Tabelle 1: P-Elimination in Batch-Versuchen bei Verwendung
verschiedener Calciumcarbonatimpfkristalle nach
6-facher Wiederverwendung in künstlichem Abwasser
bei pH 9 (15 Minuten Kontaktzeit)

P-Elimination in %

| Bei-spiel | Impf-kristall-konzentr. | Marmor Brocken (> 20 mm) | Marmor 1-1,4 mm | M2066[*) ]20µm rein | Kalkstein-mehl 5 µm Erz | Dolomit 2 µm Erz |
|---|---|---|---|---|---|---|
| 1 | 1 g/l | 60 % | 62 % | 65 % | 64 % | --- |
| 2 | 10 g/l | 62 % | 65 % | 75 % | 67 % | 73.% |

[*)]M2066 = Calcit p.A. (Fa. Merck)

Tabelle 2: Die P-Elimination aus biologisch vorgeklärtem
Abwasser des Kernforschungszentrums Karlsruhe mit
verschiedenen Calciumcarbonatimpfkristallen nach
einfacher Verwendung bei pH 9 (1 Stunde Kontaktzeit)

P-Elimination in %

| Bei-spiel | Impf-kristall-konzentr. | Marmor Brocken ( 20 mm) | Marmor 1-1,4 mm | M2066[*) ]20µm rein | Kalkstein-mehl 5 µm Erz | Dolomit 2 µm Erz |
|---|---|---|---|---|---|---|
| 3 | 1 g/l | -- | 88 % | 86 % | 87 % | --- |
| 4 | 10 g/l | _ | 89 % | 88 % | 88 % | --- |
| 5 | 100 g/l | 86 % | 90 % | 89 % | 90 % | 96 % |
| 6 | 250 g/l | -- | -- | 94 % | -- | 94 % |

Mit zunehmender Impfkristallkonzentration wird die Abscheidung besser, ebenso mit höherem pH-Wert innerhalb des angegebenen Bereichs.

Je feiner das zugesetzte Impfmaterial, desto besser wird die P-Elimination, wenn auch nur innerhalb enger Grenzen. Bei Verwendung gröberen Materials (1 - 1,4 mm mittlerer Korndurchmesser) wurde eine erhöhte Trübung der Lösung beobachtet, d. h. es trat Spontanabscheidung auf, die direkt in der Lösung und nicht auf dem Impfmaterial stattfand.

Je reiner das Impfmaterial, desto basser ist die P-Elimination. Der Einfluß ist wesentlich größer als der der Korngröße (vgl. M2066 = reines Calcit vs. Kalksteinmehl technisch).

Die analogen Effekte wurden in Durchlaufversuchen beobachtet. Bei einem vorgegebenen pH-Wert ist durch eine Verkürzung der Verweilzeit bis zu 30 Min. keine Verschlechterung der P-Ablaufkonzentration gemessen worden, weshalb sogar Verweilzeiten < 30 Min. eine gute P-Elimination erreichen. Figur 1 zeigt den Einfluß der Korngröße auf die P-Elimination in einem Durchlaufversuch bei einer Verweilzeit von 30 Min. aus künstlich hergestelltem Abwasser mit 50 g/l Calciumcarbonatimpfkristallen bei pH 9 ( —o—o— Kalksteinmehl mittlerer Korndurchmesser 5 µm; —•—•— Marmor mittlerer Korndurchmesser 1 - 1,4 mm).

Beispiel 7:

In einer Durchlaufapparatur, einem Reaktor von 30 l Inhalt, wurde die P-Elimination aus biologisch vorgeklärtem Abwasser des Kernforschungszentrums Karlsruhe bei einer Impfkristallkonzentration von 500 g/l Kalksteinmehl unter Rühren mit verschiedenen Durchlaufgeschwindigkeiten und pH-Werten durchgeführt. Der pH-Wert der Suspension wurde mit einer Ca(OH)₂-Lösung über eine pH-stat-Apparatur konstant gehalten. Die Ergebnisse der Untersuchungen (Tabelle 3) zeigen innerhalb der angegebenen Grenzen, daß die P-Elimination von der Kontaktzeit im Reaktor und vom tCO₃-Gehalt unabhängig ist.

Tabelle 3: Ergebnisse der Phosphatentfernung aus Abwasser mit Kalksteinmehlimpfkristallen (500 g/l) bei verschiedenen pH-Werten und Durchflußgeschwindigkeiten.

| pH | Durchfluß l/h | c(P) mmol/l Zulauf | c(P) mmol/l Ablauf | tCO₃ mmol/l Zulauf |
|---|---|---|---|---|
| 9.0 | 60 | 0.184 | 0.032 | 2.98 |
| | >100 | 0.169 | 0.036 | ---- |
| 9.8 | 15 | 0.268 | 0.013 | 2.49 |
| | 20 | 0.287 | 0.013 | 3.55 |
| | 30 | 0.290 | 0.011 | 3.10 |
| | 35 | 0.300 | 0.011 | 2.80 |
| 9.5 | 30 | 0.235 | 0.017 | ---- |
| | 35 | 0.204 | 0.015 | 1.83 |
| | 60 | 0.266 | 0.016 | ---- |
| 10.1 | 15 | 0.318 | 0.006 | 2.23 |
| 9.96 | 30 | 0.309 | 0.007 | 2.76 |
| 9.87 | 35 | 0.316 | 0.011 | 2.79 |

Diese Ergebnisse erdeutlichen andererseits die extreme pH-Abhängigkeit der P-Elimination, die in Fig. 2 dargestellt ist.

Die Vorteile der Erfindung gegenüber dem Stand der Technik (Fällung/Flockung) sind die, daß kein Schlamm anfällt, keine Aufsalzung erfolgt, niedrigere Rest-P-Konzentrationen als durch Fällung erreichbar sind, die P-Elimination unabhängig von den Ausgangskonzentrationen der Wasserzusammensetzung (tCO₃, DOC) und weitgehend unabhängig von der Durchflußgeschwindigkeit ist (Kontaktzeiten zwischen 3 h und 20 min (vgl. Tabelle 3) erbrachten identische Eliminationsleistungen) und schließlich, daß das anfallende Phosphat weiterverwendbar ist.

Als Vorteile gegenüber der biologischen Phosphatentfernung ist aufzuführen, daß sichere Ablauf-P-Konzentrationen, die nur vom eingestellten pH-Wert abhängen, erreicht werden und daß der Betrieb der P-Eliminationsanlage unabhängig von den Außentemperaturen erfolgt.

Der Vorteil gegenüber dem Aktivtonerdeverfahren ist der, daß keine Regeneration des verwendeten Materials erforderlich ist.

Die Vorteile gegenüber den bestehenden Pilotanlagen zur impfkristallinduzierten P-Elimination sind
- keine Vorbehandlung des Wassers
- kein Abrieb der Impfkristalle
- keine Aufsalzung des Wassers.

Durch das erfindungsgemäße Verfahren erübrigt sich eine aufwendige Vorbehandlung nach japanischem Vorbild und es sind niedrigere Restkonzentrationen als in den Normalverfahren (Calciumphosphat- oder Sandimpfkristalle) erreichbar. Ferner wird ein Abrieb von großen Kristallen und damit der Phosphataustrag vermindert.

Die Anwendung von gelöstem $Ca(OH)_2$ bringt gegenüber der Verwendung von NaOH als Lauge entscheidende Vorteile:
- Kein Schlammanfall wie beim Einsatz von $Ca(OH)_2$-Suspensionen, sondern ein Produkt, das problemlos abgezogen werden kann.
- Bessere P-Elimination durch Anreicherung des Wassers mit $CA^{2+}$-Ionen, vor allem bei weichen Wässern, bei denen laut Literatur $CaCl_2$ oder $CaSO_4$ zugesetzt werden muß.

## Ansprüche

Verfahren zur Entfernung von Phosphat aus Wässern, bei welchem
a) bei einem pH-Wert des Wassers im Bereich zwischen 8 und 10
b) Feststoffe als Abscheidehilfen zugesetzt werden, wonach
c) aus dem Wasser entfernbare Calciumphosphate gebildet werden,
dadurch gekennzeichnet, daß zu dem Wasser
d) als Abscheidehilfe Erdalkalicarbonat in einer Menge, die einer Konzentration im Bereich von mindestens 1 g/l Wasser entspricht, und
e) gelöstes $Ca(OH)_2$ in einer Menge, die den pH-Wert des Wassers auf etwa 9 bis 10 einstellt, zugegeben werden.

# Fig. 1

# Fig. 2

# EUROPÄISCHER RECHERCHENBERICHT

Europäisches Patentamt

Nummer der Anmeldung

EP 87 10 7455

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 023 968 (STAMICARBON) <br> * Seite 1, Ansprüche 1-3,9; Seite 5, Zeilen 22-31; Seite 9 * <br> --- | 1 | C 02 F 1/52 |
| A | GB-A-2 021 087 (DHV RAADGEVEND INGENIEURSBUREAU) <br> * Seite 4, Anspruch 1; Seite 3, Zeilen 19-71; Seite 4, Beispiel 3 * <br> --- | 1 | |
| A | US-A-3 562 015 (LANCY LABORATORIES) <br> * Spalte 2, Zeilen 36-59; Spalte 4, Zeilen 16-29 * <br> ----- | 1 | |

| | | | RECHERCHIERTE SACHGEBIETE (Int. Cl.4) |
|---|---|---|---|
| | | | C 02 F |

Der vorliegende Recherchenbericht wurde für alle Patentansprüche erstellt

| Recherchenort | Abschlußdatum der Recherche | Prüfer |
|---|---|---|
| DEN HAAG | 21-01-1988 | TEPLY J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...................................................................................
& : Mitglied der gleichen Patentfamilie, übereinstimmendes
    Dokument

EPO FORM 1503 03.82 (P0403)